# EUROPÄISCHE PATENTANMELDUNG

(11) **EP 2 199 951 A2**
(43) Veröffentlichungstag der Anmeldung: **23.06.2010**
(21) Anmeldenummer: 09175745.0
(22) Anmeldetag: 12.11.2009
(51) Int. Cl.: G06K 9/46, G06T 7/60

(54) **Verfahren und Vorrichtung zum Ermitteln eines Fluchtpunktes**

(30) Priorität: 19.12.2008 DE 102008064115
(71) Anmelder: Hella KGaA Hueck & Co., 59552 Lippstadt (DE)
(72) Erfinder: Feiden, Dirk, 12623, Berlin (DE); Walter, Thomas, 10245, Berlin (DE)
(74) Vertreter: Thurn, Gerhard Wilhelm

(57) **Zusammenfassung**

Zum Ermitteln eines Fluchtpunktes (28) für ein kameragestütztes Fahrerassistenzsystem werden mittels einer Kamera des Fahrerassistenzsystems mehrere Bilder (20) erfasst. Die Bilder (20) umfassen jeweils mehrere Linien (L1, L2) einzelner Bildpunkte. Entlang zumindest einer ersten und einer zweiten der Linien (L1, L2), die zueinander parallel sind, werden die Helligkeitswerte der entsprechenden Bildpunkte ermittelt. Zu jedem Bildpunkt der beiden Linien (L1, L2) werden die ermittelten Helligkeitswerte über die mehreren Bilder (20) gemittelt. Abhängig von den gemittelten Helligkeitswerten wird zumindest ein Parameter (a, s) ermittelt, durch den die gemittelten Helligkeitswerte der ersten Linie (L1) auf die gemittelten Helligkeitswerte der zweiten Linie (L2) abgebildet werden. Der Fluchtpunkt wird abhängig von dem ermittelten Parameter (a, s) ermittelt.

## Beschreibung

Die Erfindung betrifft ein Verfahren und eine Vorrichtung zum Ermitteln eines Fluchtpunktes, insbesondere für ein kameragestütztes Fahrerassistenzsystem. Das Fahrerassistenzsystem umfasst eine Kamera, mittels der mehrere Bilder erfasst werden. Die Bilder umfassen mehrere Linien einzelner Bildpunkte.

Moderne Kraftfahrzeuge weisen regelmäßig Fahrerassistenzsysteme auf. Derartige Fahrerassistenzsysteme sind häufig mit einer Kamera ausgestattet, die beispielsweise ein Bild einer Umgebung des Kraftfahrzeugs in Fahrtrichtung erfasst. Das Fahrerassistenzsystem unterstützt den Fahrer anhand von Daten, die durch Auswerten der erfassten Bilder ermittelt werden, und umfasst beispielsweise einen Spurhalteassistenten und/oder einen Abstandsassistenten und/oder ein Navigationssystem.

Damit das Fahrerassistenzsystem anhand der erfassten Bilder den Fahrer des Kraftfahrzeugs sicher und präzise unterstützen kann, ist es vorteilhaft, die genaue Ausrichtung der Kamera bezüglich der Fahrbahn und/oder des Kraftfahrzeugs besonders präzise zu kennen. Ist die Kamera präzise in vorgegebener Weise relativ zu der Fahrbahn bzw. zu dem Kraftfahrzeug ausgerichtet, so sind bei geradeaus Fahrt Koordinaten eines Fluchtpunkts, auf den alle parallelen Geraden zulaufen, fest vorgegeben. Weicht jedoch die relative Ausrichtung der Kamera zu dem Kraftfahrzeug von der Idealposition ab, beispielsweise auf Grund baulicher Toleranzen, oder ändert sich die Ausrichtung des Kraftfahrzeugs zur Fahrbahn, beispielsweise auf Grund einer wechselnden Beladung oder Betankung des Kraftfahrzeugs, so weicht ein tatsächlicher Fluchtpunkt, der anhand der erfassten Bilder ermittelt wurde, von dem vorgegebenen Fluchtpunkt ab. Eine horizontale Abweichung des Fluchtpunktes kann durch einen Gierwinkel ausgedrückt werden und eine vertikale Abweichung kann durch einen Nickwinkel ausgedrückt werden.

Es ist bekannt, anhand der erfassten Bilder den tatsächlichen Fluchtpunkt zu bestimmen und anhand der Abweichung von dem vorgegebenen Fluchtpunkt die genaue Ausrichtung der Kamera zu ermitteln. Beim Unterstützen des Fahrers wird dann die Ausrichtung der Kamera berücksichtigt.

Es ist Aufgabe der vorliegenden Erfindung, ein Verfahren und eine Vorrichtung zum Ermitteln eines Fluchtpunktes zu schaffen, die besonders einfach, insbesondere mit geringem Speicher- und Rechenaufwand, ein präzises Ermitteln des Fluchtpunktes ermöglichen.

Die Aufgabe wird gelöst durch die Merkmale der unabhängigen Ansprüche. Vorteilhafte Ausgestaltungen sind in den Unteransprüchen angegeben.

Die Erfindung zeichnet sich aus durch ein Verfahren und eine Vorrichtung zum Ermitteln eines Fluchtpunktes für ein kameragestütztes Fahrerassistenzsystem. Dabei werden mittels einer Kamera des Fahrerassistenzsystems mehrere Bilder erfasst. Die Bilder umfassen jeweils mehrere Linien einzelner Bildpunkte. Entlang zumindest einer ersten und zweiten der Linien, die zueinander parallel sind, werden Helligkeitswerte der entsprechenden Bildpunkte ermittelt. Zu jedem Bildpunkt der beiden Linien werden die ermittelten Helligkeitswerte über die mehreren Bilder gemittelt. Abhängig von den gemittelten Helligkeitswerten wird zumindest ein Parameter ermittelt. Durch den Parameter werden die gemittelten Helligkeitswerte der ersten Linie auf die gemittelten Helligkeitswerte der zweiten Linie abgebildet. Der Fluchtpunkt wird abhängig von dem ermittelten Parameter ermittelt. Alternativ dazu können auch zwei oder mehr Parameter ermittelt werden.

Die beiden Linien umfassen vorzugsweise fest vorgegebene Zeilen von Bildpunkten der Bilder. Alternativ dazu können die Linien auch Spalten von Bildpunkten der einzelnen Bilder umfassen. Das Analysieren lediglich weniger Bildzeilen ermöglicht besonders einfach das präzise Ermitteln des Fluchtpunktes, da es lediglich einen geringen Speicherplatz und einen geringen Rechenaufwand erfordert. Dass die gemittelten Helligkeitswerte der ersten Linie auf die gemittelten Helligkeitswerte der zweiten Linie abgebildet werden bedeutet in diesem Zusammenhang beispielsweise, dass ein Funktionsgraph der Helligkeitswerte der ersten Linie in Abhängigkeit von der Pixelposition, insbesondere in Abhängigkeit der horizontalen Koordinate des entsprechenden Pixels, so entlang der X-Achse verschoben und/oder gestreckt oder gestaucht wird, dass er möglichst genau einem Funktionsgraph der Helligkeitswerte der zweiten Linie in Abhängigkeit von der Pixelposition entspricht. Der ermittelte Parameter ist dann ein Maß für die Verschiebung, die Streckung bzw. die Stauchung. Die Helligkeitswerte sind vorzugsweise Farbwerte, insbesondere Grauwerte.

In einer vorteilhaften Ausgestaltung ist ein erster Parameter repräsentativ für eine Verschiebung des Funktionsgraphen der gemittelten Helligkeitswerte entlang einer der Linien, relativ zu der anderen Linie. Alternativ oder zusätzlich ist ein zweiter Parameter repräsentativ für eine Stauchung oder Streckung des Verlaufs der gemittelten Helligkeitswerte entlang einer der Linien relativ zu der anderen Linie. Dies trägt dazu bei, besonders einfach anhand der nach den Helligkeitswerten analysierten Linien den Fluchtpunkt zu bestimmen. Der Verlauf kann auch als Funktionsgraph bezeichnet werden und stellt die Helligkeitswerte in Abhängigkeit von der Position der entsprechenden Pixel dar, insbesondere in Abhängigkeit der X-Koordinate bei der Wahl horizontaler Linien und in Abhängigkeit der Y-Koordinate bei der Wahl vertikaler Linien.

Die Ermittlung des Fluchtpunktes kann weiter präzisiert werden, wenn abhängig von den ermittelten Helligkeitswerten Helligkeitswertegradienten ermittelt werden, die den Gradienten der Helligkeitswerte in Richtung der Linien entsprechen. Der oder die Parameter werden dann abhängig von den ermittelten Helligkeitswertgradienten ermittelt. Das Bilden der Gradienten eliminiert eine absolute Verschiebung der Verläufe der Helligkeitswerte der unterschiedlichen Linien, verringert dadurch eine Mindestabweichung zwischen den beiden Verläufen und trägt so zu dem besonders präzisen Ermitteln des Fluchtpunktes bei.

Ausführungsbeispiele der Erfindung sind im Folgenden anhand von schematischen Zeichnungen näher erläutert.

Es zeigen:
- Figur 1: ein mittels einer Kamera eines Fahrerassistenzsystems erfasstes Bild,
- Figur 2: eine Darstellung von Helligkeitswerten, die über mehrere der erfassten Bilder gemittelt sind,
- Figur 3: Funktionsgraphen von Helligkeitswerten in Abhängigkeit der Position der entsprechenden Pixel,
- Figur 4: Funktionsgraphen von Helligkeitswertgradienten in Abhängigkeit der Position der entsprechenden Pixel,
- Figur 5: Formeln zum Ermitteln des Fluchtpunktes.

Elemente gleicher Konstruktion oder Funktion sind figurenübergreifend mit den gleichen Bezugszeichen gekennzeichnet.

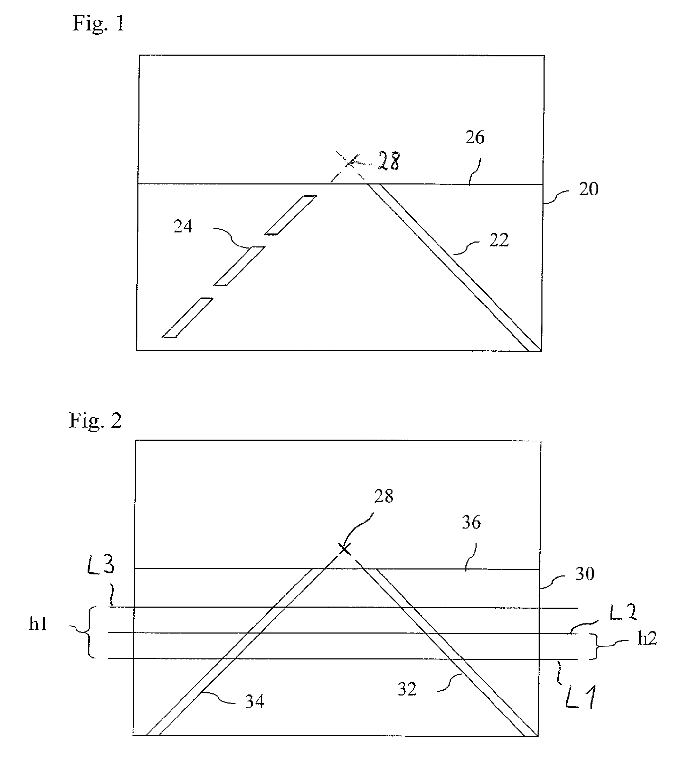

Figur 1 zeigt ein Bild 20, das mittels einer Kamera eines kameragestützten Fahrerassistenzsystems eines Kraftfahrzeugs aufgenommen wurde. Das Bild 20 stellt die Umgebung des Kraftfahrzeugs in Fahrtrichtung dar. Insbesondere zeigt das Bild 20 einen äußeren Begrenzungsstreifen 22, mittlere Begrenzungsstreifen 24 und einen Horizont 26. Aufgrund der perspektivischen Aufnahme des Bildes 20 schneiden sich alle parallelen Geraden in einem Fluchtpunkt 28.

Falls die Kamera absolut präzise in dem Kraftfahrzeug eingebaut ist und das Kraftfahrzeug gleichmäßig beladen ist, so hat der Fluchtpunkt 28 fest vorgegebene Koordinaten. Einbautoleranzen und ungleichmäßige Beladung des Kraftfahrzeugs, beispielsweise durch Tanken oder das Ein- oder Aussteigen von Personen, führen zu einer Abweichung der Koordinaten des tatsächlichen Fluchtpunktes 28 von den Koordinaten des vorgegebenen Fluchtpunktes. Eine Abweichung der X-Koordinate kann auch als Gierwinkel ausgedrückt werden und eine Abweichung der Y-Koordinate kann auch als Nickwinkel ausgedrückt werden. Die Kenntnis des Gierwinkels und des Nickwinkels kann dann zum Unterstützen des Fahrers genutzt werden, beispielsweise beim Auswerten der Bilder 20.

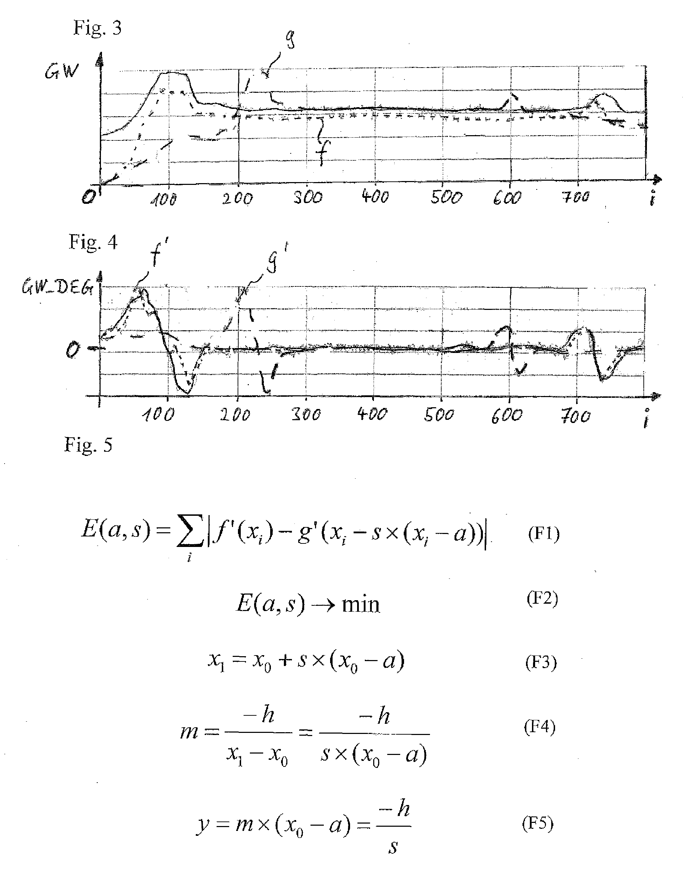

Werden während des Betriebs des kameragestützten Fahrerassistenzsystems mehrere Bilder 20 erfasst, Helligkeitswerte GW (Figur 3) der Bildpunkte der Bilder 20 ermittelt und über die mehreren erfassten Bilder 20 gemittelt, wie in Darstellung 30 in Figur 2 gezeigt, so ergeben sich mehrere Geraden, die auf den Fluchtpunkt 28 zeigen. Insbesondere entspricht nach der Mittelung der äußere Begrenzungsstreifen 22 einem gemittelten äußeren Begrenzungsstreifen 32, wohingegen die einzelnen mittleren Begrenzungsstreifen 24 zu einem durchgezogenen Mittelstreifen 34 werden. Die Helligkeitswerte GW sind vorzugsweise Farbwerte, insbesondere Grauwerte.

Zum Ermitteln des tatsächlichen Fluchtpunktes 28 werden in der Darstellung 30 zumindest zwei horizontale oder vertikale Linien ausgewählt, beispielsweise eine erste horizontale Linie L1 und eine zweite horizontale Linie L2. Die beiden Linien L1, L2 haben einen vertikalen ersten Abstand h2 zu einander. Zusätzlich können noch eine oder mehrere weitere Linien L3 ausgewählt werden, die dann beispielsweise einen Abstand h1 zu der ersten Linie L1 haben.

Figur 3 zeigt einen Verlauf der gemittelten Helligkeitswerte GW entlang der ersten und der zweiten Linien L1, L2. Die Verläufe können als erster Funktionsgraph g für die erste Linie L1 bzw. als zweiter Funktionsgraph f für die zweite Linie L2 in Abhängigkeit von einem Index i der horizontalen Bildpunkte der Darstellung 30 dargestellt werden. Die Bildpunkte können auch als Pixel bezeichnet werden. Die relativen Maxima der Funktionsgraphen f, g kennzeichnen die hellen Stellen aufgrund der Begrenzungsstreifen 32, 34 entlang der entsprechenden Linie in der Darstellung 30. Daher liegen diese Maxima bei dem Funktionsgraphen g entsprechend der ersten Linie L1 weiter außen als bei dem Funktionsgraphen f entsprechend der zweiten Linie L2.

Ein vertikaler Versatz der Funktionsgraphen f und g kann ausgeglichen werden, indem entlang der Linien L1, L2 Gradienten GW_DEG der gemittelten Helligkeitswerte GW gebildet werden, was durch Funktionsgraphen f' bzw. g' in Figur 4 dargestellt ist.

Im Weiteren wird der Funktionsgraph f oder vorzugsweise der Funktionsgraph f' mittels eines Mittelpunktparameters a und eines Streckungsfaktors s derart entlang der X-Achse verschoben bzw. gestreckt oder gestaucht, dass eine in Figur 5 in einer ersten Formel F1 dargestellte Funktion E gemäß einer zweiten Formel F2 minimal wird. In anderen Worten werden die Helligkeitswerte GW der ersten Linie L1 durch Verschieben des Verlaufs der Helligkeitswerte GW abhängig von dem Mittelpunktsparameter a und durch Strecken oder Stauchen des Verlaufs abhängig von dem Streckungsfaktor s auf die Helligkeitswerte GW der zweiten Linie L2 abgebildet. Ist die Funktion E minimal, so sind der Mittelpunktsparameter a und der Streckungsfaktor s optimal bestimmt. In den Figuren 3 und 4 zeigt jeweils die durchgezogene Linie die Helligkeitswerte GW der ersten Linie L1 nach Abbildung auf die zweite Linie L2

Eine dritte Formel F3 zeigt den Zusammenhang zwischen einer ersten Stelle x₀ des ersten Funktionsgraphen g und einer zweiten Stelle x₁ des zweiten Funktionsgraphen f. Eine Steigung m der Geraden ergibt sich aus dem Verhältnis des vertikalen Abstands h der beiden Linien und des horizontalen Abstandes der beiden Stellen x₀ und x₁, wie in einer vierten Formel F4 dargestellt. Anhand einer fünften Formel F5 kann dann die vertikale Abweichung y des Fluchtpunktes 28 ermittelt werden. Zieht man die vertikale Abweichung y von der Y-Koordinate der ersten Zeile L1 ab, die durch die Zeilennummer der ersten Zeile ausgehend vom oberen Bildrand gegeben ist, so erhält man die Y-Koordinate des Fluchtpunktes 28. Der Mittelpunktsparameter a entspricht der X-Koordinate des Fluchtpunktes 28.

Falls mehr als zwei Linien L1, L2, L3 ausgewählt werden, wird jeweils für zwei der entsprechenden Helligkeitswert-Verläufe die Funktion E angesetzt und dann werden die Parameter a, s so gewählt, dass die Summe über alle Funktionen E minimal ist.

Somit sind die horizontale und die vertikale Abweichung des tatsächlichen Fluchtpunktes 28 von einem fest vorgegebenen Fluchtpunkt bekannt. Die Abweichungen des tatsächlichen Fluchtpunktes 28 von dem vorgegebenen Fluchtpunkt können beispielsweise mittels bekannter Verfahren als Nick- und/oder Gierwinkel ausgedrückt werden. Nachfolgend können dann der Nick- bzw. Gierwinkel bei der weiteren Bildanalyse und/oder zum Unterstützen des Fahrers des Kraftfahrzeugs berücksichtigt werden.

### Bezugszeichenliste:

- 20: Bild
- 22: äußerer Begrenzungsstreifen
- 24: mittlere Begrenzungsstreifen
- 26: Horizont
- 28: Fluchtpunkt
- 30: Darstellung gemittelter Helligkeitswerte
- 32: gemittelter äußerer Begrenzungsstreifen
- 34: gemittelter Mittelstreifen
- 36: gemittelter Horizont

- L1, L2, L3: erste bis dritte Linien
- h, h1, h2: vertikale Abstände der Linien
- f, g, f', g': Funktionsgraphen
- i: Index Bildpunkt
- GW: Helligkeitswert
- GW_DEG: Helligkeitswertgradient
- E(a, s): Funktion
- min: minimal
- m: Steigung der Geraden
- a: Mittelpunktsparameter
- s: Streckungsfaktor

## Patentansprüche

1. Verfahren zum Ermitteln eines Fluchtpunktes (28) für ein kameragestütztes Fahrerassistenzsystem, bei dem
- mittels einer Kamera des Fahrerassistenzsystems mehrere Bilder (20) erfasst werden, die jeweils mehrere Linien (L1, L2) einzelner Bildpunkte umfassen,
- entlang zumindest einer ersten und einer zweiten der Linien (L1, L2), die zueinander parallel sind, die Helligkeitswerte (GW) der entsprechenden Bildpunkte ermittelt werden,
- zu jedem Bildpunkt der beiden Linien (L1, L2) die ermittelten Helligkeitswerte (GW) über die mehreren Bilder gemittelt werden,
- abhängig von den gemittelten Helligkeitswerten (GW) zumindest ein Parameter (a, s) ermittelt wird, durch den die gemittelten Helligkeitswerte (GW) der ersten Linie (L1) auf die gemittelten Helligkeitswerte (GW) der zweiten Linie (L2) abgebildet werden,
- der Fluchtpunkt (28) abhängig von dem ermittelten Parameter (a, s) ermittelt wird.

2. Verfahren nach Anspruch 1, bei dem abhängig von den gemittelten Helligkeitswerten (GW) zumindest zwei Parameter (a, s) ermittelt werden, durch die die gemittelten Helligkeitswerte (GW) der ersten Linie (L1) auf die gemittelten Helligkeitswerte (GW) der zweiten Linie (L2) abgebildet werden.

3. Verfahren nach einem der vorstehenden Ansprüche, bei dem ein erster der Parameter (a) repräsentativ ist für eine Verschiebung eines Verlaufs der gemittelten Helligkeitswerte (GW) entlang einer der Linien (L1, L2) relativ zu der anderen Linie (L1, L2) und/oder bei dem ein zweiter der Parameter (s) repräsentativ ist für eine Stauchung oder Streckung des Verlaufs der gemittelten Helligkeitswerte (GW) entlang einer der Linien (L1, L2) relativ zu der anderen Linie (L1, L2).

4. Verfahren nach einem der vorstehenden Ansprüche, bei dem abhängig von den ermittelten Helligkeitswerten (GW) Helligkeitswertgradienten (GW_DEG) ermittelt werden, die den Gradienten der Helligkeitswerte (GW) in Richtung der Linien (L1, L2) entsprechen, und bei dem der oder die Parameter (a, s) abhängig von den ermittelten Helligkeitswertgradienten (GW_DEG) ermittelt werden.

5. Verfahren nach einem der vorstehenden Ansprüche, bei dem der oder die Parameter (a, s) ermittelt werden, indem ein Verlauf der Helligkeitswerte (GW) oder der Helligkeitswertgradienten (GW_DEG) der ersten Linie (L1) in Abhängigkeit der Bildpunktposition der entsprechenden Bildpunkte ermittelt wird und indem ein Verlauf der Helligkeitswerte (GW) oder der Helligkeitswertgradienten (GW_DEG) der zweiten Linie (L2) in Abhängigkeit der Bildpunktposition der entsprechenden Bildpunkte und in Abhängigkeit der Parameter (a, s) ermittelt wird und indem die Parameter (a, s) so variiert werden, dass ein Unterschied zwischen den Verläufen der Helligkeitswerte (GW) bzw. Helligkeitswertgradienten (GW) der ersten und der zweiten Linie (L1, L2) minimal wird.

6. Verfahren nach einem der vorstehenden Ansprüche, bei dem die Helligkeitswerte (GW) der Bildpunkte entlang mehr als zweier zueinander paralleler Linie (L1, L2, L3) gemittelt werden und bei dem abhängig von den gemittelten Helligkeitswerten (GW) der oder die Parameter (a, s) ermittelt werden, durch die die gemittelten Helligkeitswerte (GW) von paarweise ausgewählten Linien (L1, L2) aufeinander abgebildet werden.

7. Vorrichtung zum Durchführen des Verfahrens nach einem der vorstehenden Ansprüche.
